# EUROPÄISCHE PATENTSCHRIFT

(11) **EP 0 699 858 B1**
(45) Veröffentlichungstag und Bekanntmachung des Hinweises auf die Patenterteilung: **15.12.1999**
(21) Anmeldenummer: 95113230.7
(22) Anmeldetag: 23.08.1995
(51) Int. Cl.: F16K 27/12, F16K 31/56

(54) **Gaseinführung in Gebäude**
Device for supply of gas in a building
Emmenée de gaz dans un bâtiment

(30) Priorität: 05.09.1994 DE 4431624; 10.10.1994 DE 4436099
(43) Veröffentlichungstag der Anmeldung: 06.03.1996
(73) Patentinhaber: Jeschke, Immanuel, D-31157 Sarstedt (DE)
(72) Erfinder: Jeschke, Immanuel, D-31157 Sarstedt (DE)
(74) Vertreter: Junius, Walther, Dr.

(56) Entgegenhaltungen:
- WO-A-90/07670
- DE-A- 1 940 927
- FR-A- 1 566 572
- US-A- 1 690 461
- US-A- 1 771 716
- US-A- 2 012 873

## Beschreibung

Die Erfindung betrifft eine Gaseinführung in Gebäude, bestehend aus einer durch miteinander verbundenen Rohren und zwischengeschalteten Fittings aufgebauten, durch eine Gebäudewand geführten Stahlrohrleitung, die mit einem Absperrventil versehenen ist, welches mit einer Betätigungsvorrichtung versehen ist, die von der Außenseite der Gebäudewand von einer außen vor der Gebäudewand stehenden Person in Absperrstellung zu bringen ist, wobei vor dem durch die Gebäudewand führenden Leitungsabschnitt ein in oder vor der Außenseite der Gebäudewand angeordnendes Absperrventil vorgesehen ist.

Eine derartige Gaseinführung in Gebäude ist aus der US-A-16 90 461 bekannt geworden, die ein Gehäuse für eine Betätigungsvorrichtung für ein Gasabsperrventil beschreibt, die in einem Brandfall außerhalb des Gebäudes befindlichen befugten Personen ein Absperren der Gasleitung ermöglichen soll, um ein Ausströmen von Gas im Gebäude zu verhindern. Dieses Gehäuse ist irgendwo außerhalb des Gebäudes zu installieren. Es soll Unbefugten eine Betätigung der im Gehäuse untergebrachten Betätigungsvorrichtung verwehren und gleichzeitig die Betätigungsvorrichtung vor Schmutz schützen.

Derartige Gaseinführungen in Gebäude wurden früher auf der Baustelle aus ihren Einzelteilen zusammengebaut, sie werden heutzutage zumeist mit einem im Inneren des Gebäudes liegenden Absperrventil als eine fest zusammengebaute Einheit geliefert, deren Einzelteile meist miteinander verschweißt sind. Das bringt nicht nur Vorteile durch kürzere Einbauzeiten, sondern vor allem den Vorteil einer größeren Sicherheit gegen Undichtigkeiten mit sich.

Der Nachteil aller hierzulande in Gebäude eingebauten Gasversorgungsanlagen ist es, daß sie nur über das im Gebäude befindliche Absperrventil absperrbar sind. Das bedeutet im Brandfall, daß ein Feuerwehrmann in den Keller des Gebäudes gehen muß, dort bei oftmals ausgefallener elektrischen Lichtversorgung die Gebäudeeinführung mit dem Absperrventil suchen muß, manchmal noch davor angehäufte Gegenstände beiseite räumen muß und dann das Absperrventil verschließen muß. Das ist oft eine langwierige Tätigkeit, die der Feuerwehrmann vielmals unter Einsatz seines Lebens auszuführen hat.

Aber nicht nur im Brandfalle ist diese Arbeit auszuführen, sondern auch bei anderen Gefahren, z.B. bei in einem Raum des Gebäudes ausströmendem Gas, und vor allem dann, wenn aus welchen Gründen auch immer, die Gefahr einer Gasexplosion besteht.

Ist die eingangs beschriebene Betätigungsvorrichtung in dem verschließbaren Kasten vorgesehen, die zumindest hierzulande nicht vorgesehen wird, muß diese erst aufgefunden und mit einem Schlüssel geöffnet werden, um die Absperrung vorzunehmen. Im Gefahrenfalle ist das umständlich und zeitraubend, zumal im Gefahrenfalle der Schlüssel nicht auffindbar sein dürfte und dann erst das Vorhängeschloß erbrochen werden muß.

Durch die FR-A- 15 66 572 ist ein mit einem anschraubbaren Deckel versehener Behälter für ein Druckminderventil bekannt geworden, in welchem sich auch ein Absperrventil befindet. Dieser Behälter ist innerhalb oder außerhalb der Mauer des Gasabnehmers anzuordnen, die Gestaltung dieses Behälters zeigt, daß er vorzugsweise für einen horizontalen Einbau mit nach oben hin abnehmbarem Deckel vorgesehen ist.

Die Erfindung vermeidet die Nachteile des Standes der Technik. Es ist die Aufgabe der Erfindung, eine einfache Möglichkeit zu schaffen, die Gaszufuhr in das Gebäude ohne ein Betreten des Gebäudes schnell und gefahrlos zu unterbrechen und diese Möglichkeit gleich beim Einbau der Gaseinführung zu realisieren.

Eine Ausführungsmöglichkeit der Erfindung besteht darin, daß vor oder in der Gebäudewand oder deren Fundament die Gasleitung im rechten Winkel oder einem einem rechten Winkel entsprechenden Bogen aus dem Erdreich herausgeführt ist, daß oberhalb der Oberfläche des Erdreiches in der Gasleitung das in oder vor der Außenseite der Gebäudewand angeordnendes Absperrventil angeordnet ist und daß von dem Absperrventil ausgehend mit einem horizontalen Leitungsabschnitt, die Gasleitung durch die Gebäudewand hindurchgeführt ist.

Eine andere Ausführungsmöglichkeit der Gaseinführung in Gebäude besteht darin, daß vor oder in der Gebäudewand oder deren Fundament die Gasleitung im rechten Winkel oder einem einem rechten Winkel entsprechenden Bogen aus dem Erdreich herausgeführt ist, daß oberhalb der Oberfläche des Erdreiches in der Gasleitung das in oder vor der Außenseite der Gebäudewand angeordnete Absperrventil angeordnet ist und daß die Gasleitung von dem Absperrventil in das Erdreich zurückgeführt und im rechten Winkel oder einem einem rechten Winkel entsprechenden Bogen in das Gebäude mit dem horizontalen Leitungsabschnitt eingeführt ist.

Hierdurch wird in der Gaszuführungsleitung eine von außen ohne ein Betreten des Gebäudes zu betätigende, auch bei Dunkelheit auffindbare, aber unbefugtem Zugriff nicht leicht zugängliche Absperrmöglichkeit geschaffen, die leicht und vor allem schnell ohne Einsatz von Menschenleben gefahrlos zu betätigen ist und die, insbesondere wenn sie Bestandteil der einstückig gelieferten Gaseinführung ist, nicht verkehrt oder mangelhaft eingebaut werden kann. Dieses Absperrventil wird vorzugsweise zusätzlich zu dem im Gebäude angeordneten Absperrventil vorgesehen.

Für diese Gaseinführung ist es weiterhin vorteilhaft, wenn das Absperrventil in einem Gehäuse untergebracht ist, welches vorzugsweise in die Gebäudeaußenwand einzumauern ist oder an der Gebäudeaußenwand anzubringenden ist oder durch mit einem Rahmen versehenen Hohlraum in der Gebäudeaußenwand gebildet ist, welche einen entfernbaren oder leicht zu zerstörenden Deckel tragen, welcher vorzugsweise Träger einer Plakette ist, welcher vorzugsweise aus Kunststoff hergestellt ist und an seinem Rand mit Vorsprügen und/oder Rasten versehen ist, welche in Vertiefungen, Schlitze oder hinter Gegenrasten am Rand des Gehäuses oder Rahmens fassen, und welcher vorzugsweise ebenso wie das Gehäuse oder der Rahmen Löcher für die Durchführung eines Verplombungsdrahtes aufweist.

Dabei ist es vorteilhaft, wenn das Gehäuse und der Dekkel aus Kunststoff gefertigt sind, vorzugsweise das Gehäuse aus einem starren, wenig elastischen Kunststoff, der vorzugsweise im Spritzgußverfahren hergestellt ist, und vorzugsweise der Deckel aus einem elastischen Kunststoff, der vorzugsweise im Tiefziehverfahren hergestellt ist.

Dabei ist es besonders vorteilhaft, wenn das Gehäuse oder der Rahmen mit der Gehäusewand fluchten und der Deckel wannenförmig geformt über die Außenebene der Gebäudewand hinaussteht. Dann ist es besonders einfach das Gehäuse oder den Rahmen ordnungsgemäß einzubauen und den Deckel im Gefahrenfalle zu entfernen.

Für die leichte Betätigung des Absperrventiles ist es vorteilhaft, wenn das Absperrventil ein Kugelventil oder ein Kükenventil ist, dessen Ventilkörper mit einer Handhabe vorzugsweise in Form eines Flügelpaares, eines Hebels oder eines geschlitzten Wellenstumpfes oder mit einem Vielkant für die Einführung oder Ankopplung eines Drehwerkzeuges versehen ist.

Für eine leichte Montage und eine sichere Betätigungsmöglichkeit ist es vorteilhaft, wenn das Absperrventil vorzugsweise rückseitig mit einer Montageplatte versehen ist. Diese gibt dem Absperrventil und der gesamtem Gashauseinführung einen besonders festen Sitz in oder an der Außenwand.

Besonders vorteilhaft für eine einfache und schnelle Betätigung des Absperrventiles ist es, wenn das Absperrventil einen durch Federdruck belasteten Ventilkörper aufweist, der durch eine Arretiervorrichtung in seiner Offenstellung gehalten ist, und wenn die Arretiervorrichtung durch Betätigung eines Knopfes, eines Hebels, einer sonstigen Handhabe oder eines Magnetventiles in ihre Entarretierstellung bringbar ist.

Dabei ist es für eine leichte Zurückstellung des Absperrventiles nach Beseitigung des Gefahrenzustandes zweckmäßig, wenn die Arretiervorrichtung mittels eines Werkzeuges, das den Ventilkörper in seine Offenstellung zurückdrückt, in die Offenstellung des Ventiles zurückschiebbar ist.

Zur Sicherung dieser Anlage ist es zweckmäßig, wenn am Deckel und am Gehäuse oder am Rahmen oder deren Teilen Löcher für die Durchführung eines Verplombungsdrahtes angeordnet sind.

Von Vorteil für einen Schutz der Anlage gegen Umwelt- und Witterungseinflüsse kann es sein, daß der Knopf zur Betätigung der Arretiervorrichtung an der Innenseite des aus mit der Hand verformbaren Material hergestellten Deckels anliegt und die Betätigung durch einfaches Ausüben von Druck auf den Deckel erfolgen kann.

Es besteht auch die Möglichkeit, daß zur besseren Ausnutzung des Gehäuseraumes im Gehäuse weitere Armaturen, vorzugsweise ein Gasdruckregler, untergebracht sind.

Insbesondere bei Verwendung eines Schutzes der Zuführungsleitung durch ein Wellrohr besteht die Möglichkeit, daß unterhalb des Absperrventiles eine Übergangsarmatur für den'Anschluß einer Kunststoffrohr-Gaszuführungsleitung angeordnet ist.

Für eine einfache Montage der Anlage ist es vorteilhaft, wenn das Gehäuse mit mindestens einem Schlitz für die Einführung des Absperrventiles und/oder anhängender Rohrleitungsteile versehen ist und wenn vorzugsweise der Schlitz mit einem entsprchend geformten Schieber verschließbar ist.

Für diejenige Ausführungsform, bei der der durch die Gebäudewand verlaufende Leitungsabschnitt unterhalb der Erdoberfläche befindlich ist, ist es zweckmäßig, wenn die beiden parallel aus dem Erdreich herausverlaufenden Rohre mechanisch fest miteinander verbunden sind. Dabei ist es vorteilhaft, wenn der eine der beiden senkrecht aus dem Erdreich austretenden und zu dem Absperrventil führenden Abschnitte der Gasleitung konzentrisch in dem anderen angeordnet ist, wobei vorzugsweise am Fußpunkt dieser konzentrischen Rohranordnung eine Verzweigung angeordnet ist, die in einer Geraden angeordnet den Eingang und den Ausgang dieser konzentrischen Rohranordnung bildet, während auf das obere Ende dieser konzentrischen Rohranordnung das Absperrventil aufgesetzt ist.

Dabei ist es vorteilhaft, wenn die Verzweigung am unteren Ende durch einen speziell geformten Fitting gebildet ist, welcher in einer Geraden angeordnet je einen Einzelrohranschluß und senkrecht zu dieser Geraden einen Anschluß für den konzentrischen Rohrabschnitt aufweist.

Für Notfälle ist es zweckmäßig, wenn das Absperrventil mit einer Notauslösevorrichtung versehen ist, die aus einer gespannten Feder und einer die Feder im gespannten Zustand haltenden Haltevorrichtung sowie einer mit einer Betäigungsvorrichtung versehenen, die Haltevorrichtung außer Betrieb setzenden Auslösevorrichtung besteht.

Auch ist es praktisch, wenn der Rohraufsatz mit einem abschraubbaren Deckel versehen ist, der vorzugsweise mit einem kindersichen Verschluss versehen ist.

Das Wesen der Erfindung ist nachstehend anhand von in der Zeichnung schematisch dargestellten Ausführungsbeispielen näher erläutert. Es zeigen:
- Fig.1: einen Schnitt durch eine in die Außenwand eines Hauses eingebaute Gaseinführung.
- Fig.2: eine Ansicht der Hausaußenwand mit einer Gaseinführung mit quadratischem Deckel.
- Fig.3: eine Ansicht der Hausaußenwand mit einer anderen Gaseinführung mit rundem Deckel.
- Fig.4: einen Schnitt durch eine an die Außenwand eines Hauses angebaute Gaseinführung.

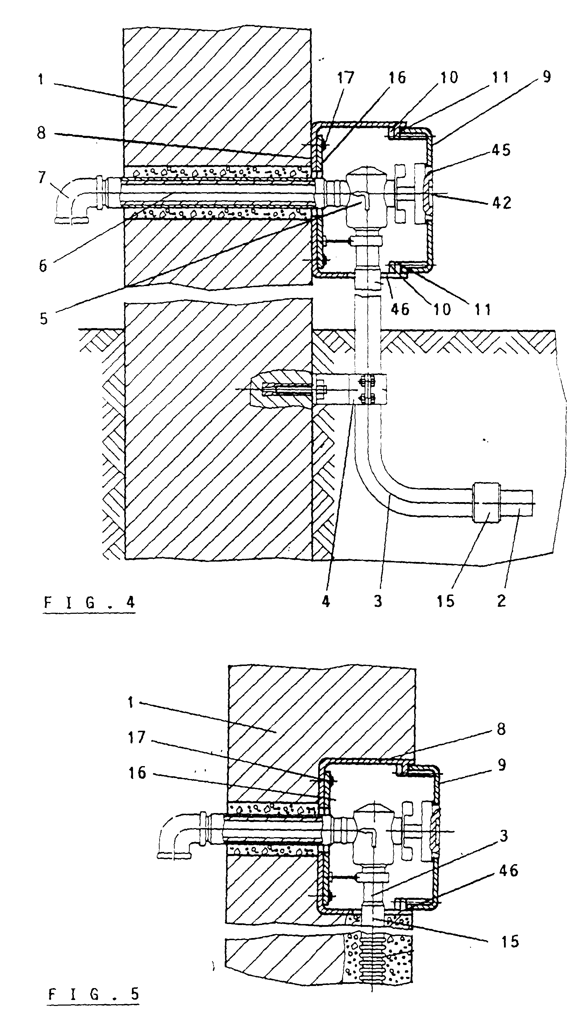

- Fig.5: einen Schnitt durch eine in die Außenwand eines Hauses eingebaute Gaseinführung mit einer wellrohrgeschützten Rohrkapsel zur Verbindung des Kunststoffzuleitungsrohres mit der Stahlrohr-Gaseinführung.
- Fig.6: eine Ansicht eines Absperrventiles.
- Fig.7: einen Schnitt durch dieses Absperrventil.
- Fig.8: eine Ansicht eines anderen Absperrventiles mit Druckknopfbetätigung.
- Fig.9: einen Schnitt durch dieses Absperrventil.
- Fig.10: eine Ansicht der bei diesem Absperrventil verwendeten Kulisse.
- Fig. 11: eine Ansicht einer anders gestalteten Gaseinleitung mit freistehend vor der Gebäudewand angeordneten Absperrvorrichtung,
- Fig.12: eine Ansicht einer weiteren Gaseinleitung mit einer Absperrvorrichtung, welche sich in einem in die Außenseite der Gebäudewand eingelassenen Kasten befindet,
- Fig.13: das äußere Absperrventil einer Gaseinführung in einem an der Außenseite der Gebäudewand angebrachten Kasten.

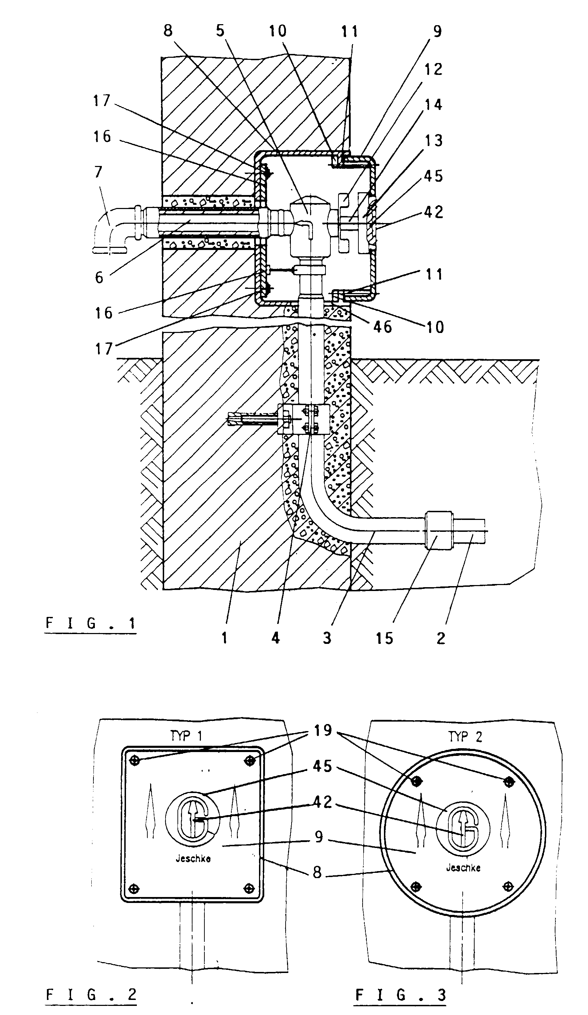

Die Gaseinführung in Gebäude der Fig.1 ist in die Aussenwand 1 des Gebäudes eingebaut. Sie besteht aus einer Rohrkapsel 15, in der die Kunststoffzuleitung 2 mit dem Stahlrohr 3 verbunden ist, das mit einer Auszugsicherung 4 in Form eines Halters versehen ist, dem Absperrventil 5 und einem weiteren Stahlrohr 6, das die Außenwand des Gebäudes senkrecht durchsetzt, mit einem endseitig angeordneten Rohrbogen 7 und weiteren nicht dargestellten Bauteilen, vorzugsweise mit einem weiteren Absperrventil, das dann im Inneren des Hauses angeordnet ist.

Das Absperrventil 5 ist in einem Gehäuse 8 in Form eines Kastens untergebracht, welches in die Außenwand 1 des Gebäudes mit deren Oberfläche fluchtend eingemauert ist. Dieses Gehäuse 8 ist mit einem Deckel 9 verschlossen, der am Rand einen Vorsprung 10 trägt, der hinter Vorsprünge 11 am Rand des Gehäuses 8 greift. Dieser Deckel 9 ist wannenförmig ausgebildet und trägt auf seiner Außenseite eine gelbe, mit dem Buchstaben G versehene Plakette 45, die in eine Vertiefung der Frontseite des Deckels 9 eingesetzt sein kann.

Dieses Absperrventil 5 ist mit einer von außen in seine Absperrstellung zu bringenden Betätigungsvorrichtung versehen, welche ein mit Flügeln 12 oder einem Knopf 13 versehener dreh- oder verschiebbarer Bolzen 14, aber auch ein am Ende einer Welle angebrachter Hebel sein kann.

Hinter dem Absperrventil 5 ist eine Montageplatte 16 fest mit dem aus dem Absperrventil 5 herausführenden Stahlrohr verbunden, vorzugsweise verschweißt. Die Montageplatte 16 ist mit Schrauben 17 mit der Rückwand des das Gehäuse 8 aufnehmenden Loches in der Außenwand verankert.

Fig. 1 zeigt, daß das Absperrventil 5 in einem in die Gebäudeaußenwand 1 einzumauernden Gehäuse untergebracht ist. Das Absperrventil 5 kann aber auch frei vor der Gehäuseaußenwand 1 angebracht sein, was jedoch mit dem Nachteil verbunden ist, daß es allen Umwelt-, Umgebungs- und Witterungseinflüssen ausgesetzt ist. Fig. 4 zeigt, daß das Absperrventil auch in einem außen an der Außenwand 1 des Gebäudes angebrachten Gehäuse 8 untergebracht sein kann. Nicht dargestellt ist, daß das sperrventil mit einem in die Gebäudeaußenwand 1 einzumauernden Rahmen versehen sein kann. Das Gehäuse 8 oder der Rahmen tragen einen leicht entfernbaren oder leicht zu zerstörenden Deckel 9. Dieser kann rechteckig oder quadratisch sein, wie Fig.2 zeigt, oder rund, wie Fig.3 zeigt. Dabei ist es vorteilhaft, wenn das Gehäuse 8 oder der Rahmen mit der Gebäudeaußenwand fluchten und der Deckel 9 wannenförmig geformt über die Außenebene der Gebäudewand 1 hinaussteht. Dabei kann es zweckmäßig sein, daß am Deckel 9 und/oder am Gehäuse 8 oder am Rahmen oder deren Teilen Löcher 19 für die Durchführung eines Verplombungsdrahtes angeordnet sind.

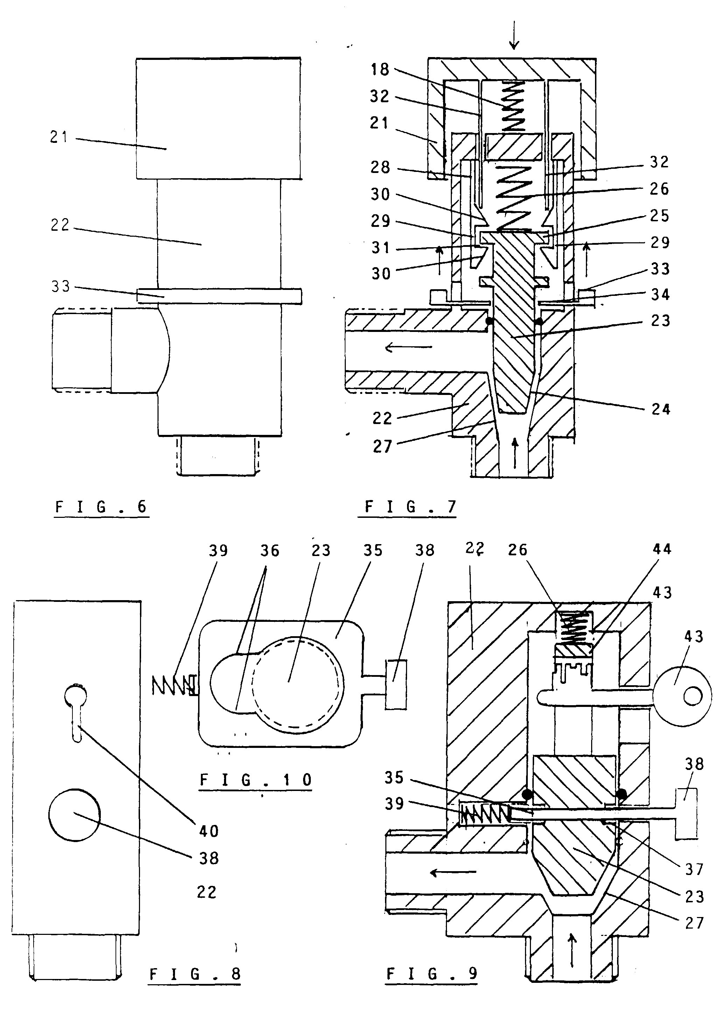

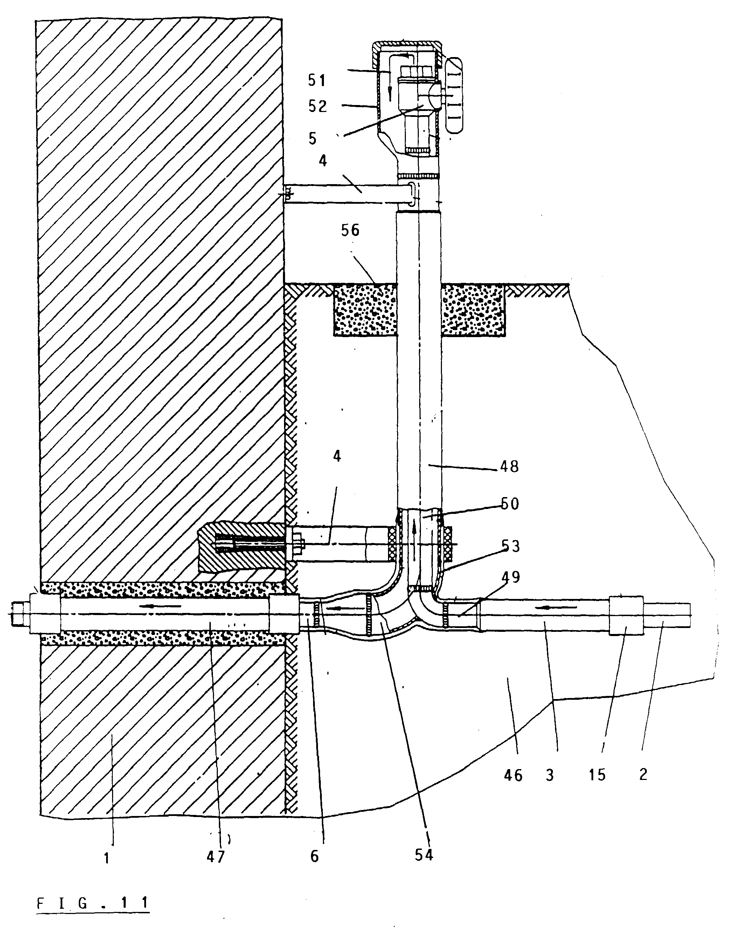

Von besonderer Bedeutung sind hier Ventile, deren Ventilkörperbewegung sehr rasch und in einfachster Weise für ein Verschließen der Gaseinführung auslösbar ist. Das ist bei Ventilen der Fall, bei denen, wie in den Fig.6 bis 10 gezeigt, das Absperrventil 5 einen durch den Druck einer Feder 26 belasteten Ventilkörper 23 aufweist, der durch eine Arretiervorrichtung in seiner Offenstellung gehalten ist. Die Arretiervorrichtung kann bei diesen Absperrventilen 5 durch Betätigung eines Knopfes 20, einer Ventilhaube 21, eines Hebels, einer sonstigen Handhabe oder eines Magneten in ihre Entarretierstellung bringbar sein.

Im Ausführungsbeispiel der Fig. 6 und 7 ist ein Absperrventil gezeigt, auf dessen Ventilgehäuse 22 axial verschiebbar und durch eine Feder 18 gestützt eine Ventilhaube 21 sitzt. Der im Ventilgehäuse 22 axial verschiebbar angeordnete, mit einer kegelförmigen Dichtfläche 24 versehene Ventilkörper 23 weist an seinem oberen Ende einen Bund 25 auf. Der Ventilkörper 23 ist mit der Kraft der Feder 26 belastet, welche ihn axial in seinen Ventilsitz 27 zu verschieben versucht. In seiner Offenstellung wird der Ventilkörper 23 durch an Blattfedern 28 befestigte Halter 29 gehalten, die auf der dem Ventilkörper 23 zugewandten Seite zwei schräge Anlaufflächen 30 und zwischen diesen eine Ausnehmung 31 aufweisen. Auf der unteren Kante dieser Ausnehmung 31 sitzt im geöffneten Zustand des Ventiles der Bundring 25. Zum Verschließen des Ventiles wird die Ventilhaube 21 niedergedrückt. Ein in ihr angeordneter Ring 32 drückt dabei die Halter 29 radial nach außen, bis diese von dem Bundring 25 gelöst sind. Dann drückt die Feder 26 den Ventilkörper 23 in den Ventilsitz 27. Das Ventil verschließt damit den Durchflußweg für das Gas. Das Ventil kann mittels des Ringes 33 wieder geöffnet werden: Durch Anheben des Ringes 33 wird ein im Inneren des Ventilgehäuses 22 angeordneter und mit dem Ring 33 gekoppelter weiterer Ring 34 nach oben gedrückt, der unter den Bundring 25 faßt und diesen mitsamt dem ganzen Ventilkörper 23 nach oben drückt, bis der Bundring in die Ausnehmung 31 fällt und sich auf deren Unterkante wieder abstützt.

Eine andere Ausführungsform eines Absperrventiles ist in den Fig. 8 bis 10 gezeigt. Der Ventilkörper 23 wird hier von Vorsprüngen 36 an einer den Ventilkörper 23 umgebenden Kulisse 35 gehalten. Diese Vorsprünge 36 greifen in eine Umfangsausnehmung 37 am Ventilkörper 23, wenn dieser sich in seiner 0ffenstellung befindet. An der Kulisse 35 ist ein Betätigungsknopf 38 angebracht. Auf der gegenüberliegenden Seite ist eine die Kulisse mit ihren Vorsprüngen 36 in die Ringnut 37 drückende Feder 39 angeordnet. Durch Drücken auf den Knopf 38 wird die Kulisse 35 in eine Stellung verschoben, in der die Vorsprünge 36 aus der Ringnut 37 am Ventilkörper 23 austreten, sodaß die Feder 26 den Ventilkörper 23 in den Ventilsitz 27 drücken kann und somit den Weg für das Gas verschließen kann.

Um das Ventil mit Hilfe eines Schlüssels 43 wieder öffnen zu können, ist auf der oberen Stirnseite des Ventilkörpers 23 ein U-förmiger Bügel 44 angebracht. Durch Drehen des in das Schlüsselloch 40 eingesteckten Schlüssels 43 wird der Bügel 44 und mit ihm der Ventilkörper 23 angehoben, bis unter der Kraft der Feder 39 sich die Kulisse 35 verschiebt, weil deren Vorsprünge 36 in die Ringnut 37 einfallen. Hierdurch ist der Ventilkörper 23 wieder in die Offenstellung des Ventiles gestellt und verbleibt in dieser, bis wieder der Betätigungsknopf 38 durch Drücken verschoben wird.

Dabei kann es vorteilhaft sein, daß der Knopf 38 zur Betätigung der Arretiervorrichtung an der Innenseite des aus mit der Hand verformbaren Material hergestellten Deckels 9 anliegt.

Eine weitere Möglichkeit der Betätigung eines verdrehbaren Ventilkörpers 23 besteht darin, daß dessen Welle 41 an ihrer Stirnseite mit einem Schlitz 42 für das Einstecken einer Münze oder eines anderen Drehwerkzeuges versehen ist.

Auch in den Ausführungsbeispielen der Fig.11 bis 13 ist die Kunststoffgasleitung 2 im Erdreich 46 verlegt. Die Kunststoffgasleitung 2 ist mittels einer Kupplung 15 an die Gaseinführung angekoppelt, die aus dem Stahlrohr 3, dem weiter zum nicht dargestellten, im Inneren des Gebäudes angeordneten Absperrventil führenden Stahlrohr 6 und dem ebenfalls nicht dargestellten, vom Absperrventil weiter zum Zähler führenden Stahlrohr besteht. Das Stahlrohr 6 ist durch die Gebäudewand 1 in einem Schutzrohr 47 vorzugsweise mit PE-Ummantelung geführt.

Das Gasrohr 3 mündet in eine konzentrische Rohranordnung 48, und zwar in den Einlaßstutzen 49, welcher in das mittig angeordnete Rohr 50 führt. Dieses Rohr 0 führt zum Absperrventil 5, welches am Ende des Rohres 50 angeordnet ist und in den Hohlraum 51 eines Rohraufsatzes 52 führt, welcher nach unten in das das mittig angeordnete Rohr 50 umgebende äußere Rohr 53 der konzentrischen Rohranordnung 48 führt. Dieses äußere Rohr 53 endet im Ausgangsstutzen 54, welcher in das Stahlrohr 6 mündet. An der Gebäudewand 1 ist die konzentrische Rohranordnung 48 mit zwei Haltern 4 befestigt. Der untere von diesen beiden Haltern 15 ist besonders stabil ausgeführt, weil er gleichzeitig eine Auszugsicherung darstellt, welche bei Zug auf die erdverlegte Gasleitung verhindert, daß Teile der im Gebäude verlegten Gasleitung aus dem Gebäude herausgezogen werden und es zu einem Gasleitungsbruch im Gebäude kommt.

Der Einlaßstutzen 49, der Auslaßstutzen 54 und das untere Teil der konzentrischen Rohranordnung 48 können als ein Fitting, vorzugsweise Schraub- oder Schweißfitting, ausgebildet und gestaltet sein.

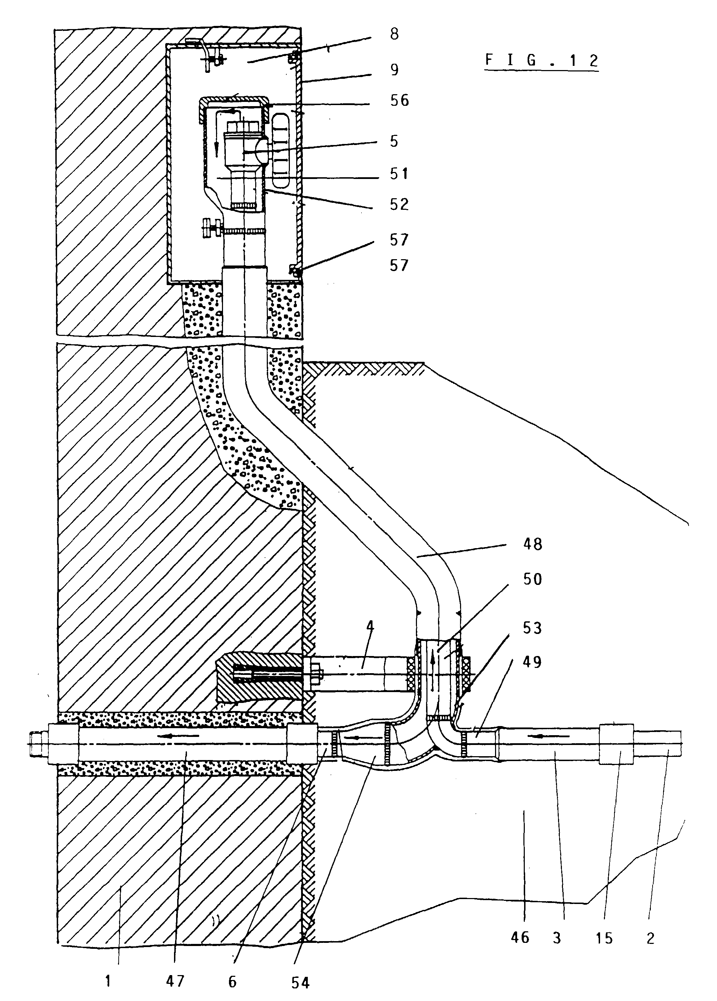

Im Ausführungsbeispiel der Fig.12 ist der Rohraufsatz 52 mit dem in ihm angeordneten Absperrventil 5 in einem Kasten 8, der mit dem Deckel 9 verschlossen ist, angeordnet. Dieser Deckel 9 wird zweckmäßigerweise mit kindersicheren Verschlüssen 57 versehen, die Kinder nicht öffnen können, sondern nur Erwachsene, die den zum Öffnen notwendigen Trick kennen. Die konzentrische Rohranordnung 48 weist hier zwei Bogen auf, um die Verzweigungsstelle am unteren Ende der konzentrischen Rohranordnung 48, bestehend aus Einlaßstutzen 49 und Ausgangsstutzen 54, außerhalb der Gebäudewand 1 anordnen zu können, den Rohraufsatz 52 jedoch in dem Kasten 8, der in die Außenwand 1 des Gebäudes eingemauert ist.

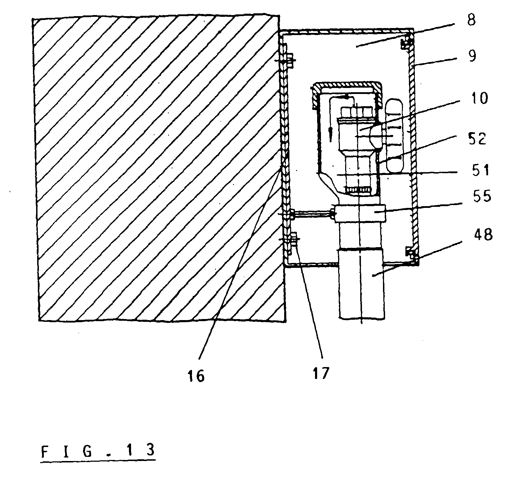

Das Ausführungsbeispiel der Fig.13 zeigt die Anordnung eines Kastens 8, der den Rohraufsatz 52 mit dem Absperrventil 5 aufnimmt, in einer Anordnung vor der Gebäudewand. Hier ist im Inneren des Kastens 8 eine Montageplatte 16 vorgesehen, die mit Schrauben 197 an der Gebäudewand befestigt ist und mittels der Halterung 5 die konzentrische Rohranordnung 48 trägt.

Von Bedeutung kann es sein, wenn der Rohraufsatz 52 mit einem abschraubbaren Deckel 56 versehen ist. Denn der Ausgang des Kugelventiles 5 mündet direkt in den Rohraufsatz 52 und diese Mündung ist auf den Deckel 6 gerichtet. Bei abgenommenem Deckel 56 können Reinigungsarbeiten in der erdverlegten Gasleitung durch Einführung von Sonden oder Reinigungsgeräten in den Ausgang des Kugelventiles 5 ausgeführt werden, es kann der Saugstutzen einer Absauganlage bei der Durchführung von Reinigungsarbeiten auf das für das Aufschrauben des Deckels vorgesehene Gewinde oder ein Gewinde am Ausgang des Kugelhahnes 5 geschraubt werden.

Die Gaseinführung wird fertig montiert an der Baustelle angeliefert und mittels der Halterungen oder Auszugssicherungen 4 an der Außenwand 1 montiert. Sodann wird das zuvor im Mauerwerk der Außenwand belassene Loch verschlossen. Danach werden die im Erdreich 46 verlegte Kunststoffleitung mittels der Rohrkapsel 15 angeschlossen und die Verlegung der Stahlrohre im Gebäude vorgenommen.

### Liste der Bezugszeichen

- 1: Außenwand
- 2: Kunststoffrohr
- 3: Stahlrohr
- 4: Auszugsicherung
- 5: Absperrventil
- 6: Stahlrohr
- 7: Rohrbogen
- 8: Gehäuse
- 9: Deckel
- 10: Vorsprung
- 11: Vorsprung
- 12: Flügel
- 13: Knopf
- 14: Bolzen
- 15: Rohrkapsel
- 16: Montageplatte
- 17: Schraube
- 18: Feder
- 19: Loch
- 20: Knopf
- 21: Ventilhaube
- 22: Ventilgehäuse
- 23: Ventilkörper
- 24: Dichtfläche
- 25: Bund
- 26: Feder
- 27: Ventilsitz
- 28: Blattfeder
- 29: Halter
- 30: Anlauffläche
- 31: Ausnehmung
- 32: Ring
- 33: Ring
- 34: Ring
- 35: Kulisse
- 36: Vorsprung
- 37: Umfangsausnehmung
- 38: Betätigungsknopf
- 39: Feder
- 40: Schlüsselloch
- 41: Welle
- 42: Schlitz
- 43: Schlüssel
- 44: Bügel
- 45: Plakette
- 46: Erdreich
- 47: Schutzrohr
- 48: konz. Rohranordnung
- 49: Einlaßstutzen
- 50: inneres Rohr
- 51: Hohlraum
- 52: Rohraufsatz
- 53: äußeres Rohr
- 54: Ausgangsstutzen
- 55: Halterung
- 56: Deckel
- 57: Kinderverschluß
- 58: Betonplatte

## Patentansprüche

1. Gaseinführung in Gebäude,
bestehend aus einer durch miteinander verbundenen Rohren (3,6) und zwischengeschalteten Fittings aufgebauten, durch eine Gebäudewand (1) geführten Stahlrohrleitung (6), die mit einem Absperrventil (5) versehenen ist, welches mit einer Betätigungsvorrichtung (12,13) versehen ist, die von der Außenseite der Gebäudewand (1) von einer außen vor der Gebäudewand (1) stehenden Person in Absperrstellung zu bringen ist,
wobei vor dem durch die Gebäudewand (1) führenden Leitungsabschnitt ein in oder vor der Außenseite der Gebäudewand (1) angeordnendes Absperrventil (5) vorgesehen ist,
dadurch gekennzeichnet,
daß vor oder in der Gebäudewand (1) oder deren Fundament die Gasleitung (4,6) im rechten Winkel oder einem einem rechten Winkel entsprechenden Bogen aus dem Erdreich (46) herausgeführt ist,
daß oberhalb der Oberfläche des Erdreiches (46) in der Gasleitung (4,6,7) das in oder vor der Außenseite der Gebäudewand (1) angeordnendes Absperrventil (5) angeordnet ist
und daß von dem Absperrventil (5) ausgehend mit einem horizontalen Leitungsabschnitt (6), die Gasleitung (3,6,7) durch die Gebäudewand (1) hindurchgeführt ist.

2. Gaseinführung in Gebäude,
bestehend aus einer durch miteinander verbundenen Rohren (3,6) und zwischengeschalteten Fittings aufgebauten, durch eine Gebäudewand (1) geführten Stahlrohrleitung (6), die mit einem Absperrventil (5) versehenen ist, welches mit einer Betätigungsvorrichtung (12,13) versehen ist, die von der Außenseite der Gebäudewand (1) von einer außen vor der Gebäudewand (1) stehenden Person in Absperrstellung zu bringen ist,
wobei vor dem durch die Gebäudewand (1) führenden Leitungsabschnitt ein in oder vor der Außenseite der Gebäudewand (1) angeordnendes Absperrventil (5) vorgesehen ist,
dadurch gekennzeichnet,
daß vor oder in der Gebäudewand (1) oder deren Fundament die Gasleitung (4,6) im rechten Winkel oder einem einem rechten Winkel entsprechenden Bogen aus dem Erdreich (46) herausgeführt ist,
daß oberhalb der Oberfläche des Erdreiches (46) in der Gasleitung (4,6,7) das in oder vor der Außenseite der Gebäudewand (1) angeordnendes Absperrventil (5) angeordnet ist
und daß die Gasleitung von dem Absperrventil (5) in das Erdreich zurückgeführt und im rechten Winkel oder einem einem rechten Winkel entsprechenden Bogen in das Gebäude mit dem horizontalen Leitungsabschnitt (6) eingeführt ist.

3. Gaseinführung nach Anspruch 1 oder 2,
dadurch gekennzeichnet,
daß die Gaseinführung einstückig hergestellt ist.

4. Gaseinführung nach Anspruch 1 oder 2,
dadurch gekennzeichnet,
daß das Absperrventil (5) in einem Gehäuse (8) untergebracht ist,
welches vorzugsweise in die Gebäudeaußenwand (1) einzumauern ist oder an der Gebäudeaußenwand (1) anzubringenden ist oder durch mit einem Rahmen versehenen Hohlraum in der Gebäudeaußenwand (1) gebildet ist, welche einen entfernbaren oder leicht zu zerstörenden Deckel (9) tragen,
welcher vorzugsweise Träger einer Plakette (45) ist
welcher vorzugsweise aus Kunststoff hergestellt ist und an seinem Rand mit Vorsprügen (10) und/ oder Rasten versehen ist, welche in Vertiefungen, Schlitze oder hinter Gegenrasten (11) am Rand des Gehäuses (8) oder Rahmens fassen,

5. Gaseinführung nach Anspruch 4,
dadurch gekennzeichnet,
daß der Deckel (9) wie das Gehäuse (8) oder der Rahmen Löcher (19) für die Durchführung eines Verplombungsdrahtes aufweist.

6. Gaseinführung nach Anspruch 1 oder 2,
dadurch gekennzeichnet,
daß das Gehäuse (8) und der Deckel (9) aus Kunststoff gefertigt sind,
daß vorzugsweise das Gehäuse (8) aus einem starren, wenig elastischen Kunststoff, der vorzugsweise im Spritzgußverfahren hergestellt ist,
und daß vorzugsweise der Deckel (9) aus einem elastischen Kunststoff, der vorzugsweise im Tiefziehverfahren hergestellt ist.

7. Gaseinführung nach Anspruch 6,
dadurch gekennzeichnet,
daß das Gehäuse (8) oder der Rahmen mit der Gehäusewand (1) fluchten und der Deckel (9) wannenförmig geformt über die Außenebene der Gebäudewand (1) hinaussteht.

8. Gaseinführung nach Anspruch 1 oder 2,
dadurch gekennzeichnet,
daß das Absperrventil (5) ein Kugelventil oder ein Kükenventil ist, dessen Ventilkörper (23) mit einer Handhabe vorzugsweise in Form eines Flügelpaares (12), eines Hebels oder eines geschlitzten Wellenstumpfes oder mit einem Vielkant für die Einführung oder Ankopplung eines Drehwerkzeuges versehen ist,
wobei das Absperrventil (5) vorzugsweise rückseitig mit einer Montageplatte (16) versehen ist.

9. Gaseinführung nach Anspruch 1 oder 2,
dadurch gekennzeichnet,
daß das Absperrventil (8) einen durch Federdruck belasteten Ventilkörper (23) aufweist, der durch eine Arretiervorrichtung in seiner Offenstellung gehalten ist,
und daß die Arretiervorrichtung durch Betätigung eines Knopfes (13,20), eines Hebels, einer sonstigen Handhabe oder eines Magneten in ihre Entarretierstellung bringbar ist.

10. Gaseinführung nach Anspruch 9,
dadurch gekennzeichnet,
daß die Arretiervorrichtung mittels eines Werkzeuges (43), das den Ventilkörper (23) in seine Offenstellung zurückdrückt, in die Offenstellung des Absperrventiles (5) zurückschiebbar ist.

11. Gaseinführung nach Anspruch 1 oder 2,
dadurch gekennzeichnet,
daß ein Knopf (13) zur Betätigung der Arretiervorrichtung an der Innenseite des aus mit der Hand verformbaren Material hergestellten Deckels (9) anliegt.

12. Gaseinführung nach Anspruch 1 oder 2,
dadurch gekennzeichnet,
daß im Gehäuse (8) weitere Armaturen, vorzugsweise ein Gasdruckregler untergebracht sind.

13. Gaseinführung nach Anspruch 1 oder 2,
dadurch gekennzeichnet,
daß unterhalb des Absperrventiles (5) eine Übergangsarmatur in Form einer Rohrkapsel(15) für den Anschluß einer Kunststoffrohrleitung (2) angeordnet ist.

14. Gaseinführung nach Anspruch 1 oder 2,
dadurch gekennzeichnet,
daß das Gehäuse (8) mit mindestens einem Schlitz (46) für die Einführung des Absperrventiles (5) und/oder anhängender Rohrleitungsteile (3,6) versehen ist
und daß vorzugsweise der Schlitz (46) mit einem entsprechend geformten Schieber verschließbar ist.

15. Gaseinführung nach Anspruch 2.
dadurch gekennzeichnet,
daß die beiden parallel aus dem Erdreich (46) herausverlaufenden Rohre (50,53) mechanisch fest miteinander verbunden sind
und vorzugsweise daß der eine der beiden senkrecht aus dem Erdreich (46) austretenden und zu dem Absperrventil (5) führenden Abschnitte (50,53) der Gasleitung konzentrisch in dem anderen angeordnet ist
wobei vorzugsweise am Fußpunkt dieser konzentrischen Rohranordnung (48) eine Verzweigung angeordnet ist,
die in einer Geraden angeordnet den Eingang (49) und den Ausgang (54) dieser konzentrischen Rohranordnung (48) bildet,
während auf das obere Ende dieser konzentrischen Rohranordnung (48) das Absperrventil (5) aufgesetzt ist.

16. Gaseinführung nach Anspruch 2,
dadurch gekennzeichnet,
daß die Verzweigung am unteren Ende durch einen speziell geformten Fitting gebildet ist,
welcher in einer Geraden angeordnet je einen Einzelrohranschluß (49,54) und senkrecht zu dieser Geraden einen Anschluß für den konzentrischen Rohrabschnitt (48) aufweist.

17. Gaseinführung nach Anspruch 1 oder 2,
dadurch gekennzeichnet,
daß das Absperrventil (5) mit einer Notauslösevorrichtung versehen ist, die aus einer gespannten Feder und einer die Feder im gespannten Zustand haltenden Haltevorrichtung sowie einer mit einer Betätigungsvorrichtung versehenen, die Haltevorrichtung außer Betrieb setzenden Auslösevorrichtung besteht.

18. Gaseinführung nach Anspruch 1 oder 2,
dadurch gekennzeichnet,
daß der Rohraufsatz (52) mit einem abschraubbaren Deckel (56) versehen ist, der vorzugsweise mit kindersicheren Verschlüssen (57) versehen ist.

## Claims

1. Gas inlet into a building, consisting of a steel pipeline (6) which is constructed of pipes (3, 6) connected to one another and interposed fittings and is passed through a building wall (1) and is provided with a shut-off valve (5) which is provided with an operating device (12, 13) which has to be brought into the shut-off position from the outside of the building wall (1) by a person standing on the outside in front of the building wall (1), whereby a shut-off valve (5) to be disposed in or in front of the outside of the building wall (1) is provided in front of the line portion leading through the building wall (1), characterised in that the gas line (4, 6) is run out of the ground (46) at a right angle or in a curve corresponding to a right angle in front of or in the building wall (1) or its foundation, in that the shut-off valve (5) to be disposed in or in front of the outside of the building wall (1) is disposed above the surface of the ground (46) in the gas line (4, 6, 7), and in that starting from the shut-off valve (5) the gas line (3, 6, 7) is run through the building wall (1) with a horizontal line portion (6).

2. Gas inlet into a building, consisting of a steel pipeline (6) which is constructed of pipes (3, 6) connected to one another and interposed fittings and is passed through a building wall (1) and is provided with a shut-off valve (5) which is provided with an operating device (12, 13) which has to be brought into the shut-off position from the outside of the building wall (1) by a person standing on the outside in front of the building wall (1), whereby a shut-off valve (5) to be disposed in or in front of the outside of the building wall (1) is provided in front of the line portion leading through the building wall (1), characterised in that the gas line (4, 6) is run out of the ground (46) at a right angle or in a curve corresponding to a right angle in front of or in the building wall (1) or its foundation, in that the shut-off valve (5) to be disposed in or in front of the outside of the building wall (1) is disposed above the surface of the ground (46) in the gas line (4, 6, 7), and in that the gas line is run back into the ground from the shut-off valve (5) and run into the building with the horizontal line portion (6) at a right angle or in a curve corresponding to a right angle.

3. Gas inlet according to claim 1 or 2, characterised in that the gas inlet is produced in one piece.

4. Gas inlet according to claim 1 or 2, characterised in that the shut-off valve (5) is accommodated in a housing (8) which is preferably to be bricked into the building outer wall (1) or attached to the building outer wall (1) or formed by a cavity provided with a frame in the building outer wall (1) and has a removable or easily destroyed cover (9) which preferably carries a disk (45) which is preferably made of plastic and at its edge is provided with projections (10) and/or catches which engage in recesses, slots or behind corresponding catches (11) at the edge of the housing (8) or frame.

5. Gas inlet according to claim 4, characterised in that the cover (9) like the housing (8) or the frame exhibits holes (19) for passage of a sealing wire.

6. Gas inlet according to claim 1 or 2, characterised in that the housing (8) and the cover (9) are made of plastic, in that preferably the housing (8) is made of a rigid, rather inelastic plastic which is preferably produced by injection moulding, and in that preferably the cover (9) is made of an elastic plastic which is preferably produced by deep drawing.

7. Gas inlet according to claim 6, characterised in that the housing (8) or the frame are flush with the housing wall (1) and the cover (9) is dish-shaped and protrudes beyond the outer plane of the building wall (1).

8. Gas inlet according to claim 1 or 2, characterised in that the shut-off valve (5) is a ball valve or a stop cock whose valve body (23) is provided with a handle preferably in the form of a butterfly (12), a lever or a slotted shaft stub or with a splined opening for the introduction or coupling of a turning tool, whereby the shut-off valve (5) is preferably provided with a mounting plate (16) at the back.

9. Gas inlet according to claim 1 or 2, characterised in that the shut-off valve (5) exhibits a spring-loaded valve body (23) which is held in its open position by a locking device, and in that the locking device can be brought into its unlocking position by operating a button (13, 20), a lever, another handle or a magnet.

10. Gas inlet according to claim 9, characterised in that the locking device can be slid back into the open position of the shut-off valve (5) by means of a tool (43) which forces the valve body (23) back into its open position.

11. Gas inlet according to claim 1 or 2, characterised in that a button (13) for operating the locking device bears on the inside of the cover (9) made of material deformable by hand.

12. Gas inlet according to claim 1 or 2, characterised in that further fittings, preferably a gas pressure regulator, are accommodated in the housing (8).

13. Gas inlet according to claim 1 or 2, characterised in that a transitional fitting in the form of a pipe coupling (15) is disposed underneath the shut-off valve (5) for connection of a plastic pipeline (2).

14. Gas inlet according to claim 1 or 2, characterised in that the housing (8) is provided with at least one slot (46) for introduction of the shut-off valve (5) and/or attached pipeline parts (3, 6) and in that preferably the slot (46) can be closed with a correspondingly shaped slide.

15. Gas inlet according to claim 2, characterised in that the two pipes (50, 53) running out of the ground (46) in parallel are secured to one another mechanically and in that preferably one of the two portions (50, 53) of the gas line emerging vertically from the ground (46) and leading to the shut-off valve (5) is disposed concentrically in the other, whereby preferably at the foot of this concentric pipe arrangement (48) there is a branch which forms the inlet (49) and the outlet (54) of this concentric pipe arrangement (48) disposed in a straight line, whereas the shut-off valve (5) is fitted to the upper end of this concentric pipe arrangement (48).

16. Gas inlet according to claim 2, characterised in that at the lower end the branches formed by a specially shaped fitting which exhibits an individual pipe connection (49, 54) disposed in a straight line and a connection for the concentric pipe portion (48) perpendicular to this straight line.

17. Gas inlet according to claim 1 or 2, characterised in that the shut-off valve (5) is provided with an emergency releasing device which consists of a tensed spring and a holding device holding the spring in the tensed state and a releasing device which is provided with an operating device and disables the holding device.

18. Gas inlet according to claim 1 or 2, characterised in that the pipe capping fitting (52) is provided with an unscrewable cover (56) which is preferably provided with childproof fastenings (57).

## Revendications

1. Dispositif d'introduction de gaz dans des bâtiments,
constitué d'une conduite (6) en tube d'acier guidée à travers une paroi de bâtiment (1), constituée par des tubes (3, 6) reliés ensemble et des raccords filetés interposés, conduite dotée d'une soupape d'isolement (5), laquelle est équipée d'un dispositif d'actionnement (12, 13), devant être mis en position d'isolement depuis l'extérieur de la paroi du bâtiment (1), par une personne se trouvant extérieurement et devant la paroi de bâtiment (1),
où, devant le tronçon de conduite guidant à travers la paroi de bâtiment (1) est prévue une soupape d'isolement (5) disposée dans ou devant la face extérieure de la paroi de bâtiment (1),
caractérisé en ce que,
devant ou dans la paroi de bâtiment (1) ou sa fondation, la conduite de gaz (4, 6) est sortie du sol (46) sous un angle droit ou selon un arc correspondant à un angle droit, en ce que la soupape d'isolement (5), disposée dans ou devant la face extérieure de la paroi de bâtiment (1), est disposée dans la conduite de gaz (4, 6, 7), au-dessus de la surface du terrain (46),
et en ce que, en partant de la soupape d'isolement (5), la conduite de gaz (3, 6, 7) est passée à travers la paroi de bâtiment (1), par un tronçon de conduite (6) horizontal.

2. Dispositif d'introduction de gaz dans des bâtiments,
constitué d'une conduite (6) en tube d'acier guidée à travers une paroi de bâtiment (1), constituée par des tubes (3, 6) reliés ensemble et des raccords filetés interposés, conduite dotée d'une soupape d'isolement (5), laquelle est équipée d'un dispositif d'actionnement (12, 13), devant être mis en position d'isolement depuis l'extérieur de la paroi du bâtiment (1), par une personne se trouvant extérieurement et devant la paroi de bâtiment (1),
où, devant le tronçon de conduite guidant à travers la paroi de bâtiment (1) est prévue une soupape d'isolement (5) disposée dans ou devant la face extérieure de la paroi de bâtiment (1)
caractérisé en ce que,
devant ou dans la paroi de bâtiment (1) ou sa fondation, la conduite de gaz (4, 6) est sortie du sol (46) sous un angle droit ou selon un arc correspondant à un angle droit, en ce que la soupape d'isolement (5), disposée dans ou devant la face extérieure de la paroi de bâtiment (1), est disposée dans la conduite de gaz (4, 6, 7), au-dessus de la surface du terrain (46),
et en ce que la conduite de gaz est retournée dans le sol, depuis la soupape d'isolement (5) et est introduite, sous un angle droit ou sous un arc correspondant à un angle droit, dans le bâtiment, par le tronçon de conduite (6) horizontal.

3. Dispositif d'introduction de gaz selon la revendication 1 ou 2,
caractérisé en ce que l'introduction de gaz est fabriquée d'une seule pièce.

4. Dispositif d'introduction de gaz selon la revendication 1 ou 2,
caractérisé en ce que la soupape d'isolement (5) est logée dans un boîtier (8),
qui de préférence est à intégrer dans la maçonnerie de la paroi extérieure de bâtiment (1), ou bien doit être monté sur la paroi extérieure de bâtiment (1), ou bien est constitué par un espace creux doté d'un cadre, ménagé dans la paroi extérieure de bâtiment (1), qui porte un couvercle (9) susceptible d'être enlevé ou facile à détruire,
qui est de préférence le support d'une plaquette (45),
qui, de préférence, est fabriqué en matière plastique et qui est doté, sur son bord, de saillies (10) et/ou de cliquets qui s'engagent dans des cavités, des fentes ou derrière des contre-cliquets (11) ménagés sur le bord du boîtier (8) ou du cadre.

5. Dispositif d'introduction de gaz selon la revendication 4,
caractérisé en ce que le couvercle (9), ainsi que le boîtier (8), ou le cadre présentent des trous (19) pour le passage d'un fil de plombage.

6. Dispositif d'introduction de gaz selon la revendication 1 ou 2,
caractérisé en ce que le boîtier (8) et le couvercle (9) sont fabriqués en matière synthétique,
en ce que, de préférence, le boîtier (8) est constitué d'une matière synthétique rigide, peu élastique, qui, de préférence, est façonnée selon un procédé de moulage par injection,
et en ce que, de préférence, le couvercle (9) est constitué d'une matière synthétique élastique, façonnée de préférence par un procédé à étirage profond.

7. Dispositif d'introduction de gaz selon la revendication 6,
caractérisé en ce que le boîtier (8) ou le cadre sont alignés avec la paroi de bâtiment (1) et le couvercle (9) ressortant du plan extérieur de la paroi de bâtiment (1), en adoptant une forme en cuve.

8. Dispositif d'introduction de gaz selon la revendication 1 ou 2,
caractérisé en ce que la soupape d'isolement (5) est une soupape à boisseau sphérique ou une soupape à noix, dont l'opercule (23) est doté d'une poignée, de préférence sous la forme d'une paire d'ailettes (12), d'un levier ou d'un bout d'arbre fendu, ou d'un élément multi-pans destiné à l'introduction ou au couplage d'un outil de rotation,
la soupape d'isolement (5) étant de préférence dotée en face arrière d'une plaque de montage (16).

9. Dispositif d'introduction de gaz selon la revendication 1 ou 2,
caractérisé en ce que la soupape d'isolement (8) présente un opercule (23) sollicité par la pression d'un ressort, opercule maintenu à sa position d'ouverture par un dispositif de blocage,
et en ce que le dispositif de blocage est susceptible d'être mis à sa position de déblocage, par actionnement d'une tête (13, 20), d'un levier, d'une autre poignée ou d'un aimant.

10. Dispositif d'introduction de gaz selon la revendication 9,
caractérisé en ce que le dispositif de blocage est susceptible d'être ramené, au moyen d'un outil (43) qui ramène l'opercule (23) à sa position d'ouverture, en une position d'ouverture de la soupape d'isolement (5).

11. Dispositif d'introduction de gaz selon la revendication 1 ou 2,
caractérisé en ce qu'un bouton (13) destiné à l'actionnement du dispositif de blocage, appuie sur la face intérieure du couvercle (9) fabriqué en un matériau déformable à la main.

12. Dispositif d'introduction de gaz selon la revendication 1 ou 2, caractérisé en ce que d'autres robinetteries, de préférence un régulateur de pression de gaz, sont logées dans le boîtier (8).

13. Dispositif d'introduction de gaz selon la revendication 1 ou 2,
caractérisé en ce qu'au-dessous de la soupape d'isolement (5) est disposée une robinetterie de transition, réalisée sous la forme d'une capsule tubulaire (15) destinée au raccordement d'une conduite tubulaire (2) en matière synthétique.

14. Dispositif d'introduction de gaz selon la revendication 1 ou 2,
caractérisé en ce que le boîtier (8) est doté d'au moins une fente (46) pour l'introduction de la soupape d'isolement (5) et/ou de pièces de tuyauterie (3, 4) accrochées,
en ce que de préférence la fente (46) est obturable au moyen d'un registre de forme correspondante.

15. Dispositif d'introduction de gaz selon la revendication 2,
caractérisé en ce que les tubes (50, 53) sortant parallèlement du sol (46) sont reliés ensemble rigidement de façon mécanique,
et, de préférence, en ce que l'un des deux tronçons (50, 53), sortant verticalement du sol (46) et menant à la soupape d'isolement (5), de la conduite du gaz, sont disposés concentriquement l'un dans l'autre,
où, de préférence, au point de pied de ce dispositif tubulaire (48) concentrique est disposée une ramification, qui constitue en étant disposée en une droite l'entrée (49) et la sortie (54) de ce dispositif tubulaire (48) concentrique,
tandis que, sur l'extrémité tubulaire de ce dispositif tubulaire (48) concentrique, est montée la soupape d'isolement (5).

16. Dispositif d'introduction de gaz selon la revendication 2,
caractérisé en ce que la ramification est constituée à l'extrémité inférieure par un raccord fileté de forme spéciale qui présente, disposés en une droite, respectivement, un raccordement de tube individuel (49, 54), et, perpendiculairement par rapport à cette droite, un raccordement pour le tronçon tubulaire (48) concentrique.

17. Dispositif d'introduction de gaz selon la revendication 1 ou 2,
caractérisé en ce que la soupape d'isolement (5) est dotée d'un dispositif de déclenchement de secours, qui est constitué d'un ressort tendu et d'un dispositif de maintien maintenant le ressort à l'état tendu, ainsi qu'un dispositif de déclenchement doté d'un dispositif d'actionnement, mettant le dispositif de maintien hors de fonctionnement.

18. Dispositif d'introduction de gaz selon la revendication 1 ou 2,
caractérisé en ce que l'élément rapporté tubulaire (52) est doté d'un couvercle (56) pouvant être dévissé, pourvu de préférence de fermetures (57) présentant une sécurité envers les enfants.
